# EUROPEAN PATENT SPECIFICATION

(11) **EP 4 122 731 B1**
(45) Date of publication and mention of the grant of the patent: **07.05.2025**
(21) Application number: 22181745.5
(22) Date of filing: 29.06.2022
(51) Int. Cl.: B60J 7/06

(54) **A COVERING ASSEMBLY FOR VEHICLES, TRAILERS, SEMI-TRAILERS AND CONTAINERS**
ABDECKANORDNUNG FÜR FAHRZEUGE, ANHÄNGER, SATTELAUFLIEGER UND CONTAINER
ENSEMBLE DE RECOUVREMENT POUR VÉHICULES, REMORQUES, SEMI-REMORQUES ET CONTENEURS

(30) Priority: 22.07.2021 IT 202100019436
(43) Date of publication of application: 25.01.2023
(73) Proprietor: Cramaro Holding S.p.A., 37044 Cologna Veneta (Verona) (IT)
(72) Inventor: Gianazza, Matteo, 37121 Verona (IT)
(74) Representative: De Anna, Pier Luigi

(56) References cited:
- EP-A1- 0 379 821
- EP-A1- 0 459 879
- EP-A1- 1 782 986
- EP-A1- 3 339 069
- NL-C1- 1 019 916

## Description

The present invention relates in general to covering assemblies for vehicles, trailers, semi-trailers and containers, of the type comprising:
a plurality of carrier ribs configured to support a tarpaulin and to be arranged for sliding along a loading compartment, each carrier rib comprising opposite ends configured to be arranged on respective side edges of the loading compartment, and
a pair of flexible connecting elements, each of said connecting elements comprising a strap of plastic material connecting a plurality of ends of said carrier ribs to each other.

In such known systems, one of the carrier ribs, or rather the ends of one of such carrier ribs, is/are connected to a controllable drive system for displacing the covering assembly between a retracted position, in which the covering assembly is folded and leaves the underlying loading compartment uncovered, and an extended position, in which the covering assembly completely covers and hence closes the underlying loading compartment.

In the covering assemblies of the type set out at the beginning, the flexible connecting elements (straps) connect the various carrier ribs to each other and, when the covering assembly is hauled between its extended position and its retracted position, ensure correct packing of the sheet, preventing it from collecting untidily so as to prevent movement as well as to prevent premature deterioration.

It has been found that the connecting straps are subject to wear and may break up into multiple portions. Since such straps are inserted into sleeves provided in the tarpaulin, it may prove very difficult to extract the broken portions from the tarpaulin to enable replacement of the straps.

EP0459879 discloses a device for covering road vehicles characterised by side elements arranged at least along the sides of the vehicle, which support movable cross-members attached to a tarpaulin connected to at least one longitudinally deformable batten. Said slats are made of an elastic and flexible material, polyethylene, polypropylene, polyamide, an elastomer or the like, and are reinforced with one or more slats have a high degree of flexibly, but also a certain rigidity tend to bend upwards not always.

EP3339069 provides a folding support for folding a tarpaulin attached to elongated slidable support means. The folding support is manufactured in one piece from plastic and comprises two end portions, two rigid portions, hingedly connected via first and second folding lines to the end portions, and a flexible central portion that is contiguous with the rigid portions. The thickness d of the central portion of the folding support decreases from both ends of the central portion towards the center of the central portion.

One object of the present invention is that of providing a solution capable of overcoming the drawback described above.

In the light of this object, the invention provides a flexible connecting element for a covering assembly for vehicles, trailers, semi-trailers and containers, said connecting element comprising a strap of plastic material configured to connect a plurality of carrier ribs to each other, said carrier ribs being adapted to support a tarpaulin, wherein said connecting element comprises at least one reinforcement cable embedded in the strap.

The areas of the connecting elements located between the connection points with the carrier ribs are shaped or otherwise configured to facilitate the formation of folds when the covering assembly is moved into the retracted position according to claim 1. Said shaping is symmetrical in lateral direction, with respect to the longitudinal axis of said connecting element, in that the shaping is trapezoidal or consists of a connection of concave and convex lines with the lateral edges of said connecting element.According to a preferred embodiment said shaping affects from 10 and 30% of the distance between the connection points with the support arches. The width L of the connecting elements is preferably between 15 - 50 mm and in the median areas between the connection points with the support arches are shaped with a reduction of said width L from 5 to 40 %. According to a further preferred embodiment said width L of the connecting elements 18, 19 is between 20 - 30 mm and in the median areas between the connection points with the support arches are shaped with a reduction of said width L' from 10 to 20 %.

Similarly and according to a preferred embodiment the thickness S of the connecting elements is between 2 - 5 mm and in the median areas between said connecting points with the support arches are shaped with a reduction of the thickness S' from 5 to 40 %; preferably said thickness S' of said median sections of the connecting elements is between 2 - 3 mm and in the median areas between said connecting points with the support arches are shaped with a reduction of the thickness S' from 10 to 30 %.

The invention further provides a covering assembly of the type set out at the beginning, wherein each of the connecting elements comprises at least one reinforcement cable embedded in the strap according to claims 8-14.

The reinforcement cable ensures that the integrity of the connecting element is maintained even if the strap of plastic material breaks. In this manner, it is possible to withdraw the connecting element from the tarpaulin for replacement, without there being any risk of portions thereof being left behind inside the sheet.

The reinforcement cable is preferably of a material having a greater tensile strength than the plastic material of the strap. For example, the reinforcement cable may be of a metallic, plastic or other type of high tensile strength material.

Further features and advantages of the invention will become clearer from the following detailed description of one embodiment of the invention, provided with reference to the appended drawings which are provided in purely illustrative and non-limiting manner, in which:
- Figures 1 and 2 are perspective views of a covering assembly according to the invention, respectively in the extended and the retracted position;
- Figure 3 is a magnified view of a detail indicated by the arrow III in Figure 1;
- Figures 4 and 5 are perspective views of a flexible connecting element of the covering assembly, respectively in the retracted and the extended position; and
- Figures 6 and 7 are perspective views of the flexible connecting element inserted in a sleeve formed in a tarpaulin, respectively under normal conditions and in the event of breakage of the connecting element.

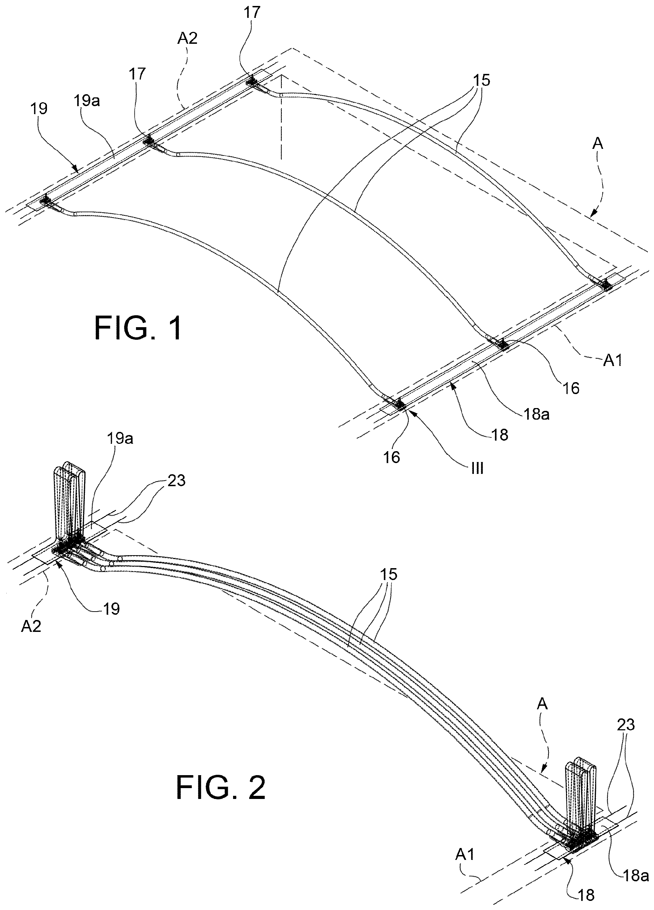

Figure 1 shows a covering assembly, installed on a loading compartment of a vehicle, trailer or container, which is depicted in simplified manner with a dashed line and indicated overall A.

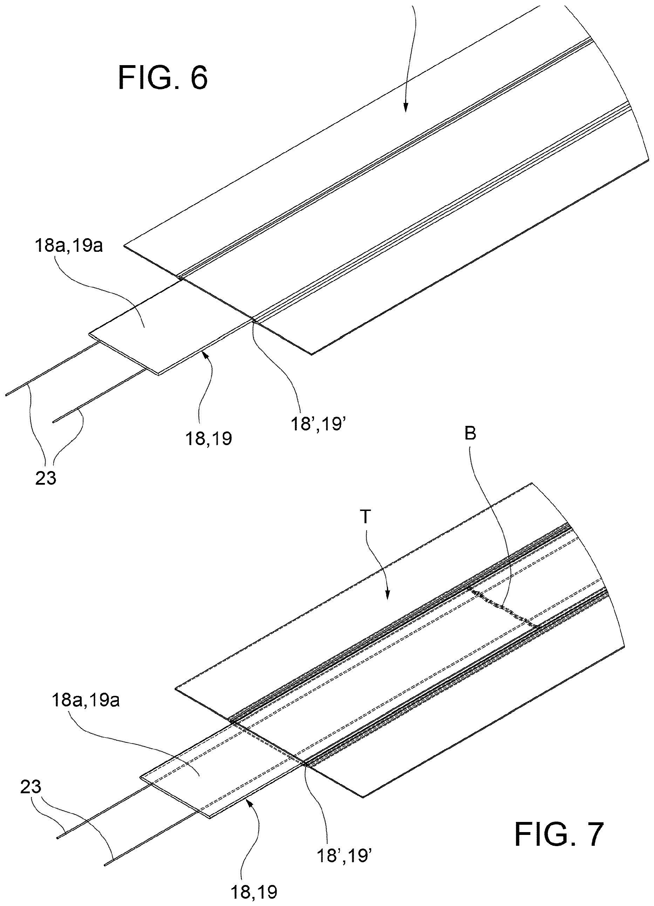

The covering assembly essentially comprises a support structure for a tarpaulin T (represented, in part, only in Figures 6 and 7), and a drive system (not shown). The support structure allows the tarpaulin to be closed (loading compartment covered by the sheet - Figure 1) or open (sheet packed at one end of the loading compartment - Figure 2). The drive system is configured to move the support structure between an extended position and a retracted position, respectively corresponding to the closed and the open position of the sheet. The drive system may comprise a cord, as in the example shown. Said cord is selectively windable around or unwindable from a reel (not shown), which may be controlled by a motor or by a manually operable handle. The drive system may, however, be of a different type.

The support structure comprises a plurality of carrier ribs 15 configured to support the tarpaulin T. Each carrier rib 15 comprises opposing ends 16, 17 arranged on respective side edges A1, A2 of the loading compartment A. The drive system (not shown) is connected to the ends 16, 17 of one of the carrier ribs 15 arranged terminally in relation to the others.

The support structure furthermore comprises a pair of flexible connecting elements 18, 19. Each of the connecting elements 18, 19 comprises a strap 18a, 19a of plastic material connecting the respective ends 16 and 17 of the carrier ribs 15 to each other.

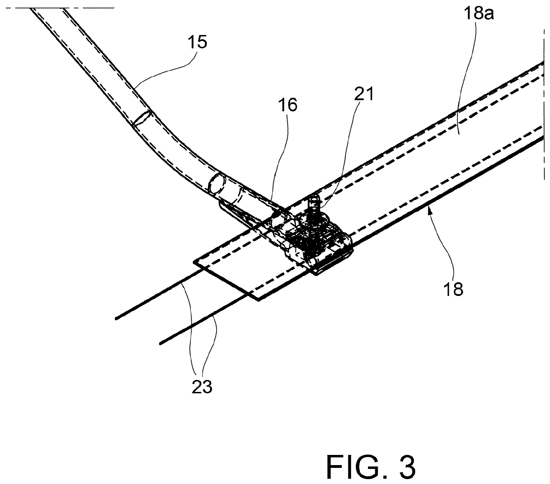

Figure 3 shows a detail of the fixation of the end 16 of one of the carrier ribs 15 to the respective connecting element 18. In particular, said fixation is made by way of a bolt 21 which fixes the connecting element 18 to the end 16 of the carrier rib 15. It is understood that the fixation method is identical for all the carrier ribs 15 and for both connecting elements 18, 19.

With reference to Figure 6, each connecting element 18, 19 is inserted inside a sleeve 18', 19' formed along a respective side edge of the tarpaulin T. The above-described bolt 21 secures the end of the carrier rib 15 both to the connecting element 18, 19 and to the tarpaulin T (which was not shown in Figure 3).

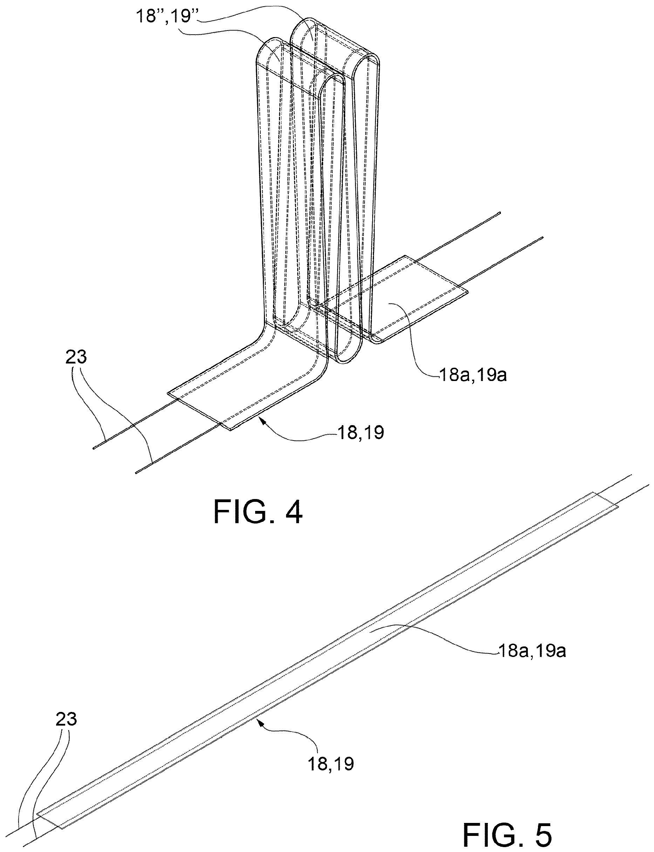

Figures 4 and 5 show only the connecting element 18, 19. When the covering assembly is in the retracted position (Figure 4), the connecting element 18, 19 (together with the tarpaulin T into which it is inserted) creates folds 18", 19" by the areas thereof located between the connection points with the carrier ribs 15; Figure 4 can be compared with Figure 2 in this respect.

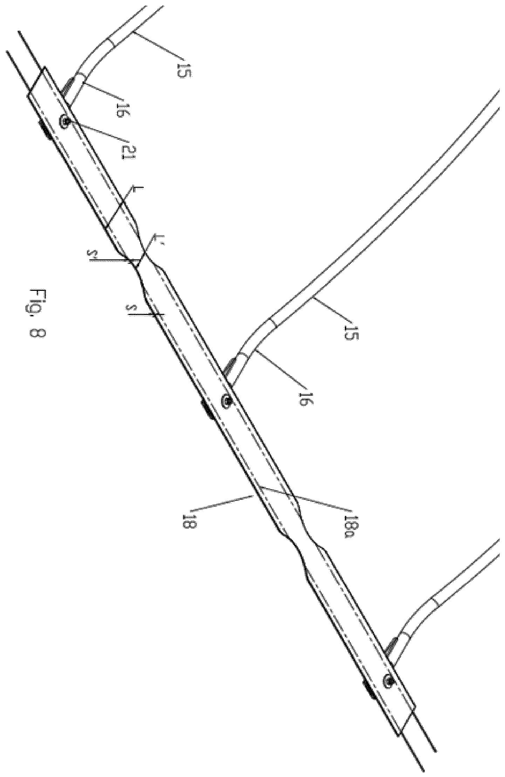

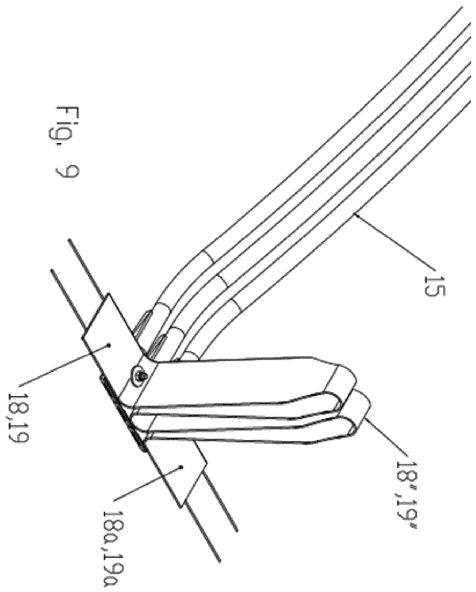

According to a preferred method of construction, the areas of the connecting elements 18, 19 located between the connection points with the carrier ribs 15 may be shaped or otherwise configured to facilitate the formation of folds when the covering assembly is moved into the retracted position, see Figures 8 and 9.

Each of the connecting elements 18, 19 comprises at least one reinforcement cable 23 embedded in the strap 18a, 19a of plastic material of the connecting element 18, 19. Said reinforcement cable 23, which extends along the entire length of the respective connecting element 18, 19, is preferably of metallic material.

Figure 7 shows a similar detail to that of Figure 6. In particular, Figure 7 shows the situation in which a break B occurs which interrupts the continuity of the strap 18a, 19a of plastic material. Since the reinforcement cable 23 maintains the continuity of the connecting element 18, 19, it is possible to withdraw the latter from the respective sleeve 18', 19' (once the bolts 21 have been undone, obviously) without there being any risk of portions of strap being left behind inside the sleeve.

Figures 8 and 9 show a preferred embodiments in which the areas of the connecting elements 18, 19 located between the connection points with the support arches 15 are shaped or otherwise configured to facilitate the formation of folds when the roof assembly is moved from the extended position, Fig. 8, to the retracted position, Fig. 9.

In Figures 8 and 9, the shaping of the connecting element is symmetrical with respect to the axis of said connecting element, with concave and convex lines with the side edges of the connecting element. This preferred embodiment does not exclude connections with trapezoidal lines with the lateral edges of the connecting element. Preferably, this shaping affects between 10 and 30% of the distance between the connection points with the supporting arches 15. According to this prefabrication method, the width L of the connecting elements 18, 19 is between 15 and 50 mm and in the median zones between the connection points with the support arches 15 the reduction of said width L decreases to the value L' of 5 to 40 %; preferably the width L of the connecting elements 18, 19 is between 20 - 30 mm and in the median zones between the points of connection with the supporting arches 15 L the connecting elements 18, 19 are shaped with a reduction of said width L' from 10 to 20 %.

Similarly to what is shown in Figures 8 and 9, the connecting element 18, 19 has a thickness S of between 2 - 5 mm and in the median areas between the connection points with the support arches 15 the connecting element is shaped with a thickness reduction S' of 5 to 40 %; preferably said thickness S of said middle sections of the connecting elements 18, 19 is between 2 - 3 mm and in the median areas between the connection points with the support arches 15 are shaped with a thickness reduction S' of 10 to 30 %.

## Claims

1. A flexible connecting element (18, 19) for a covering assembly for vehicles, trailers, semi-trailers and containers, said connecting element comprising a strap (18a, 19a) of plastic material configured to connect a plurality of carrier ribs (15) to each other and at least one reinforcement cable (23) embedded in the strap (18a, 19a), said carrier ribs being adapted to support a tarpaulin (T), wherein said connecting element is **characterized by**
• comprising areas of the connecting element (18, 19) located between the connection points with the carrier ribs (15) shaped to facilitate the formation of folds when the covering assembly is moved into the retracted position,
wherein said shaping is symmetrical in lateral direction, with respect to the longitudinal axis of said connecting element, in that the shaping is trapezoidal or consists of a connection of concave and convex lines with the lateral edges of said connecting element.

2. The connecting element according to claim 1, wherein said shaping affects from 10 and 30% of the distance between the connection points with the support arches 15.

3. The connecting element according to claim 2, wherein the width L of the connecting elements (18, 19) is between 15 - 50 mm and in the median areas between the connection points with the support arches 15 are shaped with a reduction of said width L from 5 to 40 %.

4. The connecting element according to claim 3, wherein said width L of the connecting element (18, 19) is between 20 - 30 mm and in the median areas between the connection points with the support arches (15) are shaped with a reduction of said width L from 10 to 20 %.

5. The connecting element according to claims 2 - 4, wherein the thickness S of the connecting element (18, 19) is between 2 - 5 mm and in the median areas between said connecting points with the support arches 15 are shaped with a reduction of the thickness S from 5 to 40 %.

6. The connecting element according to claim 5, wherein said thickness S' of said median sections of the connecting element (18, 19) is between 2 - 3 mm and in the median areas between said connecting points with the support arches (15) are shaped with a reduction of the thickness S from 10 to 30 %.

7. The connecting element according to claim 6, wherein said reinforcement cable is of a material having a greater tensile strength than the plastic material of the strap.

8. A covering assembly for vehicles, trailers, semi-trailers and containers, comprising a plurality of carrier ribs (15) configured to support a tarpaulin (T) and to be arranged for sliding along a loading compartment (A), each carrier rib (15) comprising opposite ends (16, 17) configured to be arranged on respective side edges (A1, A2) of the loading compartment (A), and a pair of flexible connecting elements (18, 19), each of said connecting elements comprising a strap (18a, 19a) of plastic material connecting a plurality of respective ends (16, 17) of said carrier ribs to each other and at least one reinforcement cable (23) embedded in the strap (18a, 19a), wherein said connecting element is **characterized by**
• comprising areas of the connecting element (18, 19) located between the connection points with the carrier ribs (15) shaped or otherwise configured to facilitate the formation of folds when the covering assembly is moved into the retracted position,
wherein said shaping is symmetrical in lateral direction, with respect to the longitudinal axis of said connecting element,in that the shaping is trapezoidal or consists of a connection of concave and convex lines with the lateral edges of said connecting element.

9. The covering assembly according to claim 8, wherein said shaping affects from 10 and 30% of the distance between the connection points with the support arches 15.

10. The covering assembly according to claim 9, wherein the width L of the connecting elements (18, 19) is between 15 - 50 mm and in the median areas between the connection points with the support arches 15 are shaped with a reduction of said width L from 5 to 40 %.

11. The covering assembly according to claim 10, wherein said width L of the connecting element (18, 19) is between 20 - 30 mm and in the median areas between the connection p*oin*ts with the support arches (15) are shaped with a reduction of said width L from 10 to 20 %.

12. The covering assembly according to claims 10 - 11, wherein the thickness S of the connecting element (18, 19) is between 2 - 5 mm and in the median areas between said connecting points with the support arches 15 are shaped with a reduction of the thickness S from 5 to 40 %.

13. The covering assembly according to claim 12, wherein said thickness S' of said median sections of the connecting element (18, 19) is between 2 - 3 mm and in the median areas between said connecting points with the support arches (15) are shaped with a reduction of the thickness S from 10 to 30 %.

14. The covering assembly according to claims 8-13, wherein:
a. said reinforcement cable is of a material having a greater tensile strength than the plastic material of the strap;
b. each end (16, 17) of each carrier rib (15) is fixed to the respective connecting element (18, 19) through at least one bolt (21), or
c. each connecting element (18, 19) is inserted into a sleeve (18', 19') formed in the tarpaulin (T).

## Patentansprüche

1. Ein flexibles Verbindungselement (18, 19) für eine Abdeckanordnung für Fahrzeuge, Anhänger, Sattelauflieger und Container, wobei das genannte Verbindungselement einen Riemen (18a, 19a) aus Kunststoffmaterial umfasst, der dazu ausgebildet ist, eine Vielzahl von Trägerrippen (15) miteinander zu verbinden, und mindestens ein Verstärkungskabel (23), das in den Riemen (18a, 19a) eingebettet ist, wobei die genannten Trägerrippen dazu geeignet sind, eine Plane (T) zu tragen, wobei das genannte Verbindungselement **dadurch gekennzeichnet ist, dass**
• es Bereiche des Verbindungselements (18, 19) umfasst, die zwischen den Verbindungspunkten mit den Trägerrippen (15) angeordnet und so geformt sind, dass sie die Bildung von Falten erleichtern, wenn die Abdeckanordnung in die eingefahrene Position bewegt wird,
wobei die genannte Formgebung in seitlicher Richtung und bezogen auf die Längsachse des genannten Verbindungselements symmetrisch ist, so dass die Formgebung trapezförmig ist oder aus einer Verbindung von konkaven und konvexen Linien mit den seitlichen Kanten des genannten Verbindungselements besteht.

2. Das Verbindungselement nach Anspruch 1, wobei die genannte Formgebung 10 bis 30 % des Abstandes zwischen den Verbindungspunkten mit den Stützbögen 15 betrifft.

3. Das Verbindungselement nach Anspruch 2, wobei die Breite L der Verbindungselemente (18, 19) zwischen 15 und 50 mm liegt und in den Mittelbereichen zwischen den Verbindungspunkten mit den Stützbögen (15) mit einer Reduzierung der genannten Breite L von 5 bis 40 % geformt sind.

4. Das Verbindungselement nach Anspruch 3, wobei die genannte Breite L des Verbindungselements (18, 19) zwischen 20 und 30 mm liegt und in den Mittelbereichen zwischen den Verbindungspunkten mit den Stützbögen (15) mit einer Reduzierung der genannten Breite L von 10 bis 20 % geformt sind.

5. Das Verbindungselement gemäß den Ansprüchen 2 bis 4, wobei die Dicke S des Verbindungselements (18, 19) zwischen 2 und 5 mm liegt und in den Mittelbereichen zwischen den genannten Verbindungspunkten mit den Stützbögen 15 mit einer Reduzierung der Dicke S von 5 bis 40 % geformt sind.

6. Das Verbindungselement nach Anspruch 5, wobei die genannte Dicke S' der genannten Mittelabschnitte des Verbindungselements (18, 19) zwischen 2 und 3 mm liegt und in den Mittelbereichen zwischen den genannten Verbindungspunkten mit den Stützbögen (15) mit einer Reduzierung der Dicke S von 10 bis 30 % geformt sind.

7. Das Verbindungselement nach Anspruch 6, wobei das genannte Verstärkungskabel aus einem Material mit einer höheren Zugfestigkeit als das Kunststoffmaterial des Riemens besteht.

8. Eine Abdeckanordnung für Fahrzeuge, Anhänger, Sattelauflieger und Container, die eine Vielzahl von Trägerrippen (15) umfasst, die so ausgebildet sind, dass sie eine Plane (T) tragen, und so angeordnet sind, dass sie entlang eines Laderaums (A) gleiten, wobei jede Trägerrippe (15) gegenüberliegende Enden (16, 17) umfasst, die so ausgebildet sind, dass sie an den jeweiligen Seitenrändern (A1, A2) des Laderaums (A) angeordnet werden, und ein Paar flexibler Verbindungselemente (18, 19), wobei jedes der genannten Verbindungselemente einen Riemen (18a, 19a) aus Kunststoffmaterial umfasst, der eine Vielzahl der jeweiligen Enden (16, 17) der genannten Trägerrippen miteinander verbindet, und mindestens ein Verstärkungskabel (23), das in den Riemen (18a, 19a) eingebettet ist, wobei das genannte Verbindungselement **dadurch gekennzeichnet ist, dass**:
• es Bereiche des Verbindungselements (18, 19) umfasst, die zwischen den Verbindungspunkten mit den Trägerrippen (15) angeordnet und so geformt oder auf andere Weise ausgebildet sind, dass sie die Bildung von Falten erleichtern, wenn die Abdeckanordnung in die eingefahrene Position bewegt wird,
wobei die genannte Formgebung in seitlicher Richtung und bezogen auf die Längsachse des genannten Verbindungselements symmetrisch ist, so dass die Formgebung trapezförmig ist oder aus einer Verbindung von konkaven und konvexen Linien mit den seitlichen Kanten des genannten Verbindungselements besteht.

9. Die Abdeckanordnung nach Anspruch 8, wobei die genannte Formgebung 10 bis 30 % des Abstandes zwischen den Verbindungspunkten mit den Stützbögen 15 betrifft.

10. Die Abdeckanordnung nach Anspruch 9, wobei die Breite L der Verbindungselemente (18, 19) zwischen 15 und 50 mm liegt und in den Mittelbereichen zwischen den Verbindungspunkten mit den Stützbögen 15 mit einer Reduzierung der genannten Breite L von 5 bis 40 % geformt sind.

11. Die Abdeckanordnung nach Anspruch 10, wobei die genannte Breite L des Verbindungselements (18, 19) zwischen 20 und 30 mm liegt und in den Mittelbereichen zwischen den Verbindungspunkten mit den Stützbögen (15) mit einer Reduzierung der genannten Breite L von 10 bis 20 % geformt sind.

12. Die Abdeckanordnung nach den Ansprüchen 10-11, wobei die Dicke S des Verbindungselements (18, 19) zwischen 2 und 5 mm liegt und in den Mittelbereichen zwischen den genannten Verbindungspunkten mit den Stützbögen 15 mit einer Reduzierung der Dicke S von 5 bis 40 % geformt sind.

13. Die Abdeckanordnung nach Anspruch 12, wobei die genannte Dicke S' der genannten Mittelabschnitte des Verbindungselements (18, 19) zwischen 2 und 3 mm liegt und in den Mittelbereichen zwischen den genannten Verbindungspunkten mit den Stützbögen (15) mit einer Reduzierung der Dicke S von 10 bis 30 % geformt sind.

14. Die Abdeckanordnung nach den Ansprüchen 8 bis 13, wobei:
a. das genannte Verstärkungskabel aus einem Material mit einer höheren Zugfestigkeit als das Kunststoffmaterial des Riemens besteht;
b. jedes Ende (16, 17) jeder Trägerrippe (15) über mindestens eine Schraube (21) an dem jeweiligen Verbindungselement (18, 19) befestigt ist, oder
c. jedes Verbindungselement (18, 19) in eine in der Plane (T) ausgebildete Schlaufe (18', 19') eingesetzt ist.

## Revendications

1. Élément de raccordement flexible (18, 19) destiné à un ensemble de recouvrement pour véhicules, remorques, semi-remorques et conteneurs, ledit élément de raccordement comprenant une sangle (18a, 19a) en matière plastique configurée pour raccorder une pluralité de nervures porteuses (15) les unes aux autres et au moins un câble de renforcement (23) encastré dans la sangle (18a, 19a), lesdites nervures porteuses étant adaptées pour supporter une bâche (T), dans lequel ledit élément de raccordement est **caractérisé en ce que**
• il comprend des zones de l'élément de raccordement (18, 19), situées entre les points de raccordement avec les nervures porteuses (15) conformées pour faciliter la formation de plis lorsque l'ensemble de recouvrement est déplacé en position rétractée,
dans lequel la conformation est symétrique selon la direction latérale, par rapport à l'axe longitudinal dudit élément de raccordement, en ce sens la conformation est trapézoïdale ou consiste en une connexion de lignes concaves et convexes avec les bords latéraux dudit élément de raccordement.

2. Élément de raccordement selon la revendication 1, dans lequel ladite conformation affecte 10 à 30 % de la distance entre les points de raccordement avec les arcs porteurs 15.

3. Élément de raccordement selon la revendication 2, dans lequel la largeur L des éléments de raccordement (18, 19) est comprise entre 15 et 50 mm et dans les zones médianes entre les points de raccordement avec les arcs porteurs 15 sont conformées avec une réduction de 5 à 40 % de ladite largeur L.

4. Élément de raccordement selon la revendication 3, dans lequel ladite largeur L de l'élément de raccordement (18, 19) est comprise entre 20 et 30 mm et dans les zones médianes entre les points de raccordement avec les arcs porteurs (15) sont conformées avec une réduction de 10 à 20 % de ladite largeur L.

5. Élément de raccordement selon les revendications 2 à 4, dans lequel l'épaisseur S de l'élément de raccordement (18, 19) est comprise entre 2 et 5 mm et dans les zones médianes entre lesdits points de raccordement avec les arcs porteurs 15 sont conformées avec une réduction de 5 à 40 % de ladite épaisseur S.

6. Élément de raccordement selon la revendication 5, dans lequel ladite épaisseur S' desdites sections médianes de l'élément de raccordement (18, 19) est comprise entre 2 et 3 mm et dans les zones médianes entre lesdits points de raccordement avec les arcs porteurs (15) sont conformées avec une réduction de 10 à 30 % de l'épaisseur S.

7. Élément de raccordement selon la revendication 6, dans lequel ledit câble de renforcement est fait d'un matériau ayant une résistance à la traction supérieure à la matière plastique de la sangle.

8. Ensemble de recouvrement pour véhicules, remorques, semi-remorques et conteneurs, comprenant une pluralité de nervures porteuses (15) configurées pour supporter une bâche (T) et pour être agencées de manière à glisser le long d'un compartiment de chargement (A), chaque nervure porteuse (15) comprenant des extrémités opposées (16, 17) configurées pour être agencées sur des bords latéraux (A1, A2) respectifs du compartiment de chargement (A), et une paire d'éléments de raccordement flexibles (18, 19), chacun desdits éléments de raccordement comprenant une sangle (18a, 19a) en matière plastique mettant en raccord l'une avec l'autre une pluralité d'extrémités (16, 17) respectives desdites nervures porteuses et au moins un câble de renforcement (23) encastré dans la sangle (18a, 19a), dans lequel ledit élément de raccordement est **caractérisé en ce que**
• il comprend des zones de l'élément de raccordement (18, 19) situées entre les points de raccordement avec les nervures porteuses (15) conformées ou autrement configurées pour faciliter la formation de plis lorsque l'ensemble de recouvrement est déplacé en position rétractée,
dans lequel ladite conformation est symétrique selon la direction latérale, par rapport à l'axe longitudinal dudit élément de raccordement, en ce sens la conformation est trapézoïdale ou consiste en une connexion de lignes concaves et convexes avec les bords latéraux dudit élément de raccordement.

9. Ensemble de recouvrement selon la revendication 8, dans lequel ladite conformation affecte 10 à 30 % de la distance entre les points de raccordement avec les arcs porteurs 15.

10. Ensemble de recouvrement selon la revendication 9, dans lequel la largeur L des éléments de raccordement (18, 19) est comprise entre 15 et 50 mm et dans les zones médianes entre les points de raccordement avec les arcs porteurs 15 sont conformées avec une réduction de 5 à 40 % de ladite largeur L.

11. Ensemble de recouvrement selon la revendication 10, dans lequel la largeur L de l'élément de raccordement (18, 19) est comprise entre 20 et 30 mm et dans les zones médianes entre les points de raccordement avec les arcs porteurs (15) sont conformées avec une réduction de 10 à 20 % de ladite largeur L.

12. Ensemble de recouvrement selon les revendications 10 et 11, dans lequel l'épaisseur S de l'élément de raccordement (18, 19) est comprise entre 2 et 5 mm et dans les zones médianes entre lesdits points de raccordement avec les arcs porteurs 15 sont conformées avec une réduction de 5 à 40 % de l'épaisseur S.

13. Ensemble de recouvrement selon la revendication 12, dans lequel ladite épaisseur S' desdites sections médianes de l'élément de raccordement (18, 19) est comprise entre 2 et 3 mm et dans les zones médianes entre lesdits points de raccordement avec les arcs porteurs (15) sont conformées avec une réduction de 10 à 30 % de l'épaisseur S.

14. Ensemble de recouvrement selon les revendications 8 à 13, dans lequel :
a. ledit câble de renforcement est fait d'un matériau ayant une résistance à la traction supérieure à la matière plastique de la sangle ;
b. chaque extrémité (16, 17) de chaque nervure porteuse (15) est fixée à l'élément de raccordement (18, 19) respectif par l'intermédiaire d'au moins un boulon (21), ou
c. chaque élément de raccordement (18, 19) est inséré dans un manchon (18', 19') formé dans la bâche (T).
